# FASCICULE DE BREVET EUROPEEN

(11) **EP 4 452 751 B1**
(45) Date de publication et mention de la délivrance du brevet: **14.10.2026**
(21) Numéro de dépôt: 22840264.0
(22) Date de dépôt: 13.12.2022
(51) Int. Cl.: B64C 11/38, F01D 7/00, F04D 29/32

(54) **MODULE DE TURBOMACHINE EQUIPÉ D'AUBES A CALAGE VARIABLE ET D'UN DISPOSITIF DE TRANSFERT D'HUILE**
MODUL EINER TURBOMASCHINE, DAS MIT VERSTELLBAREN SCHAUFELN UND MIT EINER ÖLÜBERTRAGUNGSANORDNUNG AUSGESTATTET IST
TURBOMACHINE MODULE EQUIPPED WITH VARIABLE PITCH BLADES AND WITH AN OIL TRANSFER DEVICE

(30) Priorité: 20.12.2021 FR 2113952
(43) Date de publication de la demande: 30.10.2024
(73) Titulaire: SAFRAN AIRCRAFT ENGINES, 75015 Paris (FR)
(72) Inventeur: FRANTZ, Caroline Marie, 77550 MOISSY-CRAMAYEL (FR); BECOULET, Julien Fabien Patrick, 77550 MOISSY-CRAMAYEL (FR); MILLIER, Vincent François Georges, 77550 MOISSY-CRAMAYEL (FR); RODA, Jean Charles Olivier, 77550 MOISSY-CRAMAYEL (FR)
(74) Mandataire: Gevers & Orès
(86) Numéro de dépôt international: PCT/FR2022/052327
(87) Numéro de publication internationale: WO 2023/118689

(56) Documents cités:
- EP-A1- 3 179 044
- EP-A1- 3 205 576
- WO-A1-2020/074816
- FR-A1- 3 075 881
- FR-A1- 3 087 233

## Description

### Domaine de l'invention

La présente invention concerne le domaine des turbomachines d'aéronef. Elle vise en particulier un module de turbomachine comprenant des aubes à calage variable, un système de calage des pas des aubes et un dispositif de transfert d'huile. Elle vise également la turbomachine correspondante ainsi qu'un procédé de montage ou démontage du module.

### Arrière-plan technique

L'art antérieur comprend les documents WO-A1-2020/074816, EP-A1-3179044, FR-A1-3075881, EP-A1-3205576 et FR-A1-3087233.

Les turbomachines comprennent de manière générale une soufflante carénée ou une hélice non carénée équipée d'aubes mobiles à calage variable. Une soufflante carénée munie d'aubes à calage ou à pas variable permet de régler le calage ou l'orientation des pales des aubes en fonction des paramètres de vol de manière à optimiser le fonctionnement de la soufflante. Cette configuration permet d'optimiser le module dans lequel une telle soufflante est intégrée. Pour rappel, l'angle de calage d'une pale correspond à l'angle, dans un plan longitudinal perpendiculaire à l'axe de rotation de la pale, entre la corde de la pale et le plan de rotation de la soufflante. Les aubes à calage variable peuvent occuper une position dite d'inversion de poussée (connue sous le terme anglais « reverse ») dans laquelle celles-ci permettent de générer une contre poussée pour participer au ralentissement de l'aéronef et une position de mise en drapeau dans laquelle, en cas de défaillance ou de panne, celles-ci permettent de limiter leur résistance. Les aubes de la soufflante sont entraînées en rotation par un arbre moteur. Un tel exemple de soufflante avec des aubes à calage variable est décrit dans la demande de brevet FR-A1-3087233.

Les turbomachines équipées d'hélices non carénées sont connues sous le terme anglais « open rotor » ou « unducted fan ». Dans cette catégorie de turbomachine, il existe celles qui ont deux hélices non carénées et contrarotatives (connues sous l'acronyme anglais UDF pour « Unducted Dual Fan ») ou celles ayant une seule hélice non carénée et un redresseur comprenant plusieurs aubes de stator (connues sous l'acronyme anglais USF pour « Unducted Single Fan »). L'hélice ou les hélices formant la partie propulsive peu(ven)t être placée(s) à l'arrière du générateur de gaz (ou moteur) de sorte à être du type pousseur ou à l'avant du générateur de gaz de sorte à être du type tracteur. Ces turbomachines sont des turbopropulseurs qui se distinguent des turboréacteurs par l'utilisation d'une hélice à l'extérieur de la nacelle (non carénée) au lieu d'une soufflante interne présentée ci-avant. Cela permet d'augmenter le taux de dilution de façon très importante sans être pénalisé par la masse des carters ou nacelles destiné(e)s à entourer les pales de l'hélice ou soufflante. Le calage variable permet dans le même but de freiner l'aéronef ou de limiter la résistance en cas de défaillance.

Actuellement, que ce soient les soufflantes carénées ou les hélices non carénées à aubes à calage variable, le système de changement de pas comprend un moyen de commande qui est relié d'une part, à un arbre de soufflante qui est typiquement entrainé par l'arbre moteur via un réducteur de vitesse et d'autre part, à un mécanisme de liaison couplé aux aubes à calage variable. Le moyen de commande, situé dans un repère tournant de la turbomachine, comprend généralement un corps mobile qui en se déplaçant agit sur la position des pales des aubes à calage variable. Le moyen de commande est alimenté par un fluide de lubrification dont la source d'alimentation est agencée dans un repère fixe de la turbomachine. Un dispositif de transfert de fluide pour permettre le passage du repère fixe au repère tournant est typiquement agencé en aval du réducteur de vitesse impliquant un agencement complexe et un risque de fuite du lubrifiant. Cela entraîne également une usure des pièces du dispositif de transfert de fluide ce qui réduit la durée de vie.

Par ailleurs, les aubes de soufflante présentent aujourd'hui des diamètres importants pour augmenter le taux de dilution des turbomachines. Cependant, avec le système de changement de pas et le grand diamètre de la soufflante, la masse du rotor de soufflante est importante et peut influer sur la stabilité de celui-ci lors de la rotation. Cette problématique d'instabilité peut également induire des fuites d'huile au niveau du moyen de commande et dans toute l'enceinte de lubrification.

### Résumé de l'invention

L'objectif de la présente invention est de fournir un module de turbomachine équipé d'aubes à calage variable qui permet de réduire les risques de fuites de lubrifiant tout en permettant un gain en compacité et étant économique.

Nous parvenons à cet objectif conformément à l'invention grâce à un module de turbomachine d'axe longitudinal, comportant :
- une soufflante destinée à être entrainée en rotation autour de l'axe longitudinal X par un arbre de soufflante, la soufflante comprenant une pluralité d'aubes de soufflante à calage variable pouvant pivoter chacune autour d'un axe de calage,
- un réducteur de vitesse relié à l'arbre de soufflante qui est guidé en rotation par au moins un premier palier de guidage à roulements et un deuxième palier de guidage à roulements qui sont situés en amont du réducteur de vitesse,
- un système de changement de pas des aubes de soufflante comprenant un mécanisme de liaison relié aux aubes de la soufflante et un moyen de commande agissant sur le mécanisme de liaison, le moyen de commande étant agencé en amont du réducteur de vitesse et comportant un corps annulaire solidaire en rotation de l'arbre de soufflante et un corps mobile, par rapport audit corps annulaire, qui est relié au mécanisme de liaison,
- un dispositif de transfert de fluide qui est configuré pour alimenter le moyen de commande et qui est monté sur le moyen de commande,
le réducteur de vitesse étant à train d'engrenage planétaire, et en ce que le dispositif de transfert de fluide étant agencé en amont du réducteur de vitesse et comportant une partie stator solidaire d'une structure fixe de la turbomachine et une partie rotor engagée dans la partie stator, la partie rotor étant solidaire en rotation du corps annulaire du moyen de commande, le moyen de commande étant agencé en amont des premier et deuxième paliers de guidage.

Ainsi, cette solution permet d'atteindre l'objectif susmentionné. En particulier, le réducteur de vitesse à train d'engrenages planétaire autorise l'intégration du dispositif de transfert de fluide en amont du réducteur de vitesse, soit dans un le repère tournant de la turbomachine. Cette configuration permet de limiter les fuites de fluide (huile) dans le dispositif de transfert, de limiter les déperditions thermiques dû à l'échauffement de l'huile par son cisaillement et d'augmenter la durée de vie du dispositif de transfert de fluide. D'autre part, le montage en amont du réducteur de vitesse et notamment sur le moyen de commande permet d'accéder facilement et rapidement au dispositif de transfert pour sa maintenance sous l'aile de l'aéronef. D'autre part, avec une intégration moins complexe, l'encombrement est réduit et le montage/démontage de l'ensemble est opéré rapidement. Cela diminue le temps d'intervention ainsi que le coût de ces interventions des opérateurs et l'immobilisation de l'aéronef dans les aéroports.

Le module comprend également l'une ou plusieurs des caractéristiques suivantes, prises seules ou en combinaison :
- le réducteur de vitesse comporte un porte-satellites immobile en rotation et une couronne qui est couplée à l'arbre de soufflante.
- le premier palier de guidage et le deuxième palier de guidage sont placés l'un par rapport à l'autre suivant une distance prédéterminée au regard de l'axe longitudinal.
- le deuxième palier de guidage est placé en amont du premier palier de guidage et le deuxième palier de guidage présente un diamètre externe inférieur au diamètre externe du premier palier.
- le premier palier de guidage est placé en aval de l'axe de calage des aubes de soufflante et le deuxième palier de guidage est placé en amont de l'axe de calage.
- le deuxième palier de guidage est placé proche de l'axe de calage des aubes de soufflante avec une distance maximale prédéterminée entre l'axe de calage et un axe du deuxième palier passant par un plan médian de la longueur axiale du palier.
- le corps annulaire comprend une face aval dans laquelle est défini un trou qui est centré sur l'axe longitudinal et la partie rotor du dispositif de transfert comprend une extrémité amont qui est logée dans le trou.
- le corps annulaire comprend une bride radiale s'étendant autour de la face aval et qui est fixée sur une bride radiale de la partie rotor du dispositif de transfert de fluide, une paroi d'étanchéité s'étendant au moins en partie entre les brides radiales et comprenant un bord externe en contact étanche avec une paroi interne cylindrique de l'arbre de soufflante.
- le dispositif de transfert de fluide s'étend au moins en partie à l'intérieur de l'arbre de soufflante.
- la partie stator du dispositif de transfert de fluide est fixée au porte-satellites traversé par au moins un premier canal d'alimentation et un deuxième canal d'alimentation.
- le moyen de commande comprend une première chambre et une deuxième chambre à volumes variables, et des moyens d'alimentation des première et deuxième chambres qui sont formés dans le corps annulaire, les moyens d'alimentation comprenant au moins une première conduite débouchant dans la première chambre et au moins une deuxième conduite débouchant dans la deuxième chambre, la première conduite et la deuxième conduite débouchant également dans la face aval du corps annulaire.
- la partie stator comprend une surface cylindrique interne et des premières canalisations débouchant dans la surface cylindrique interne, la partie rotor comprenant une surface cylindrique externe dans laquelle débouchent des deuxièmes canalisations, les deuxièmes canalisations étant couplées respectivement avec les premières et deuxièmes conduites du corps annulaire.
- le corps mobile se déplace en translation suivant l'axe longitudinal.
- le réducteur de vitesse comprend un planétaire intérieur, des satellites, un porte-satellites qui porte les satellites et une couronne extérieure.
- le planétaire intérieur est couplé à l'arbre de puissance.
- le réducteur de vitesse est logé dans une enceinte de lubrification.
- un moins un palier de guidage en rotation d'un pied d'aube est logé dans un logement interne d'un anneau.
- le module comprend une pièce annulaire présentant une forme générale en cloche, la pièce annulaire ayant une portion solidaire du corps mobile du moyen de commande et une bride solidarisée au mécanisme de liaison, la pièce annulaire s'étendant au moins en partie radialement à l'extérieur du corps annulaire.
- le dispositif de transfert de fluide est relié à une source d'alimentation disposée en aval du réducteur de vitesse.
- le dispositif de transfert de fluide est un dispositif de transfert d'huile.
- les deuxièmes canalisations de la partie rotor sont en communication fluidique avec les premières canalisations de la partie stator.
- un système d'étanchéité est monté entre le dispositif de transfert et le moyen de commande de manière à éviter les fuites d'huile vers le moyen de commande.
- le système de changement de pas comprend une pièce annulaire présentant une forme générale en cloche et reliant le mécanisme de liaison au moyen de commande, la pièce annulaire s'étendant radialement à l'extérieur du moyen de commande.

L'invention concerne en outre une turbomachine d'aéronef comprenant au moins un module de turbomachine présentant l'une quelconque des caractéristiques précédentes.

L'invention concerne en outre un aéronef comprenant au moins une turbomachine telle que susmentionnée.

L'invention concerne également un procédé de montage du module tel que susmentionné, le procédé comprenant une étape de fixation du dispositif de transfert de fluide sur le moyen de commande et une étape de mise en place du moyen de commande dans le rotor de soufflante.

### Brève description des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux dessins schématiques annexés dans lesquels :
La figure 1 est une vue schématique, en coupe axiale et partielle d'un exemple de turbomachine avec une soufflante carénée à laquelle s'applique l'invention ;
La figure 2 représente de manière schématique et suivant une coupe axiale partielle, une aube mobile à calage variable et un système de changement de pas de celle-ci agencé dans un rotor de soufflante selon l'invention ;
La figure 3 illustre de manière schématique le rotor de soufflante et un système d'alimentation en fluide d'un moyen de commande équipant un système de changement des pas des aubes de la soufflante selon l'invention;
La figure 4 est une vue en perspective d'un dispositif de transfert d'huile entre un repère fixe et un repère tournant de la turbomachine, le dispositif de transfert étant monté sur une face aval d'un moyen de commande équipant un système de changement de pas selon l'invention ;
La figure 5 représente de manière schématique un exemple d'agencement de paliers de guidage d'un arbre de soufflante et d'un exemple de dispositif de transfert d'huile agencé à l'intérieur de l'arbre de soufflante selon l'invention ; et
La figure 6 représente les étapes d'un procédé de montage du module de turbomachine selon l'invention.

### Description détaillée de l'invention

L'invention s'applique à une turbomachine destinée à être montée sur un aéronef. L'aéronef comprend un fuselage et au moins deux ailes s'étendant de part et d'autre du fuselage suivant l'axe du fuselage. Au moins une turbomachine est montée sous chaque aile. La turbomachine peut être un turboréacteur, par exemple une turbomachine équipée d'une soufflante carénée (turbosoufflante) ou d'un turbopropulseur, par exemple une turbomachine équipée d'une hélice non carénée (« open rotor », « USF » pour «Unducted Single Fan » ou « UDF » pour « Unducted Dual Fan »). Bien entendu l'invention s'applique à d'autres types de turbomachine.

De manière générale et dans la suite de la description, le terme « soufflante » est employé pour désigner indifféremment une soufflante ou une hélice.

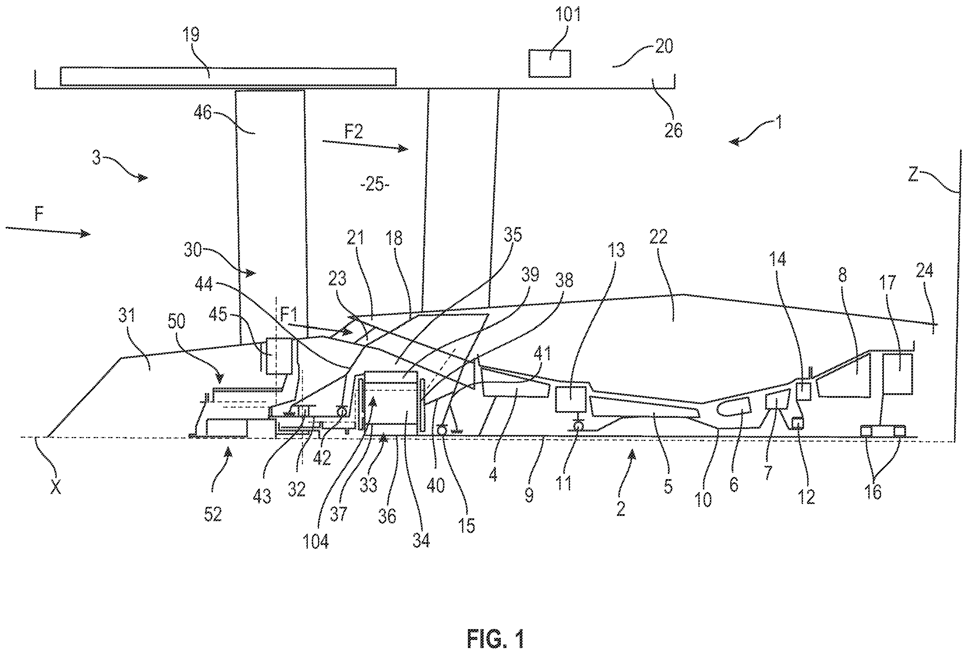

Dans la présente invention, et de manière générale, les termes « amont », « aval » « axial » et « axialement » sont définis par rapport à la circulation des gaz dans la turbomachine et ici suivant l'axe longitudinal X (et même de gauche à droite sur la figure 1). De même, les termes « radial », « radialement », « interne », « intérieur », « externe » et « extérieur »sont définis par rapport à un axe radial Z perpendiculaire à l'axe longitudinal X et au regard de l'éloignement par rapport à l'axe longitudinal X.

Pour faciliter sa fabrication et son assemblage/montage/démontage, une turbomachine est en général modulaire c'est-à-dire qu'elle comprend plusieurs modules qui sont fabriqués indépendamment les uns des autres et qui sont assemblés ensuite les uns aux autres. La modularité d'une turbomachine facilite en outre sa maintenance. Dans la présente demande, nous entendons par « module de turbomachine », un module qui comprend notamment une soufflante et un arbre de soufflante pour entraîner la soufflante.

Sur la figure 1, la turbomachine 1 comprend un générateur de gaz 2 en amont duquel est montée une soufflante 3. Le générateur de gaz 2 comporte typiquement d'amont en aval, un compresseur basse pression 4, un compresseur haute pression 5, une chambre de combustion 6, une turbine haute pression 7 et une turbine basse pression 8. Les rotors du compresseur basse pression 4 et de la turbine basse pression 8 sont reliés mécaniquement par un arbre basse pression 9 de manière à former un corps basse pression. Les rotors du compresseur haute pression 5 et de la turbine haute pression 7 sont reliés mécaniquement par un arbre haute pression 10 de manière à former un corps haute pression. Le corps haute pression est guidé en rotation autour de l'axe longitudinal par un premier palier 11 à roulements en amont et un deuxième palier 12 à roulements en aval. Le premier palier 11 est monté radialement entre un carter inter-compresseur 13 et une extrémité amont de l'arbre haute pression 10. Le carter inter compresseur 13 est agencé axialement entre les compresseurs basse pression 4 et haute pression 5. Le deuxième palier 12 est monté radialement entre un carter inter-turbine 14 et une extrémité aval de l'arbre haute pression 10. Le carter inter-turbine 14 est agencé axialement entre les turbines basse pression 7 et haute pression 8. Le corps basse pression est guidé en rotation autour de l'axe longitudinal X via un troisième palier 15 à roulements et un quatrième palier double 16 à roulements. Ces derniers sont montés radialement entre un carter d'échappement 17 et une extrémité aval de l'arbre basse pression 9. Le carter d'échappement 17 est situé en aval de la turbine basse pression 8. Le premier palier 15 est monté radialement entre un carter d'entrée 18 et une extrémité amont de l'arbre basse pression 9 L'arbre haute pression 10 s'étend radialement au moins en partie à l'extérieur de l'arbre basse pression 9 et sont coaxiaux.

Dans une autre configuration non représentée, le corps basse pression ou de faible pression comprend le compresseur basse pression qui est relié à une turbine de pression intermédiaire. Une turbine libre de puissance est montée en aval de la turbine de pression intermédiaire et est reliée à l'hélice décrite ci-après via un arbre de transmission de puissance pour l'entraîner en rotation.

La soufflante 3 est ici carénée par un carter de soufflante 19 qui porte (avec des aubes de stator montées en aval de la soufflante) une nacelle 20. La soufflante 3 comprime un flux d'air qui entre dans la turbomachine en se divisant en un flux d'air primaire F1 et en flux d'air secondaire F2 au niveau d'un bec de séparation 21. Ce dernier est porté par le carter d'entrée 18 centré sur l'axe longitudinal X. Le carter d'entrée 18 est prolongé en aval par un carter externe ou carter inter-veine 22. Le flux d'air primaire F1 circule dans une veine primaire 23 qui traverse le générateur de gaz 2 et s'en échappe par une tuyère primaire 24. Le flux d'air secondaire F2 circule dans une veine secondaire 25 et s'en échappe par une tuyère secondaire 26. La veine primaire 23 et la veine secondaire 25 sont séparées par le carter inter-veine 22.

La soufflante 3 comprend une série d'aubes de soufflante 30 s'étendant radialement autour d'un rotor de soufflante 31. Le rotor de soufflante 31 est traversé par un arbre de soufflante 32, cylindrique, centré sur l'axe longitudinal X. L'arbre de soufflante 32 entraîne en rotation le rotor de soufflante 31 autour de l'axe longitudinal X. L'arbre de soufflante 32 est lui-même entraîné en rotation par un arbre de transmission de puissance d'axe longitudinal X via un mécanisme de transmission de puissance 33. Dans le présent exemple, l'arbre de transmission de puissance est l'arbre basse pression 9. L'arbre de soufflante 32 et l'arbre basse pression 9 sont coaxiaux. De manière alternative, l'arbre de puissance est un arbre de turbine de puissance alimenté en gaz par le générateur de gaz 2.

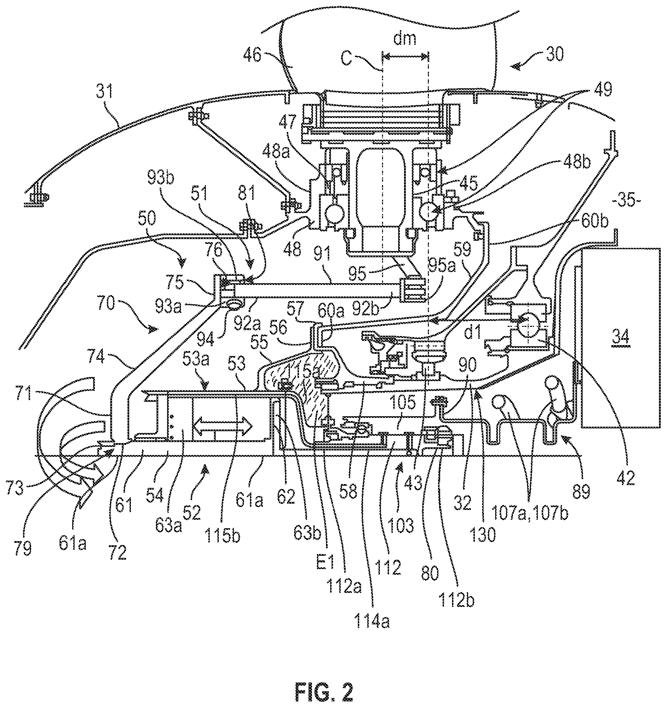

En référence aux figures 1 et 2, le mécanisme de transmission de puissance 33 est un réducteur de vitesse 34 mécanique permettant de réduire la vitesse de rotation de l'arbre de soufflante 32 par rapport à la vitesse de l'arbre basse pression 9. D'autre part, le réducteur de vitesse 34 permet l'agencement d'une soufflante avec un diamètre important de manière à augmenter le taux de dilution. Le réducteur 34 est de type à train d'engrenage planétaire. Ce dernier est logé dans une enceinte de lubrification 35 dans lequel celui-ci est lubrifié. Le réducteur de vitesse est relié à l'arbre de soufflante 32. Typiquement, le réducteur de vitesse 34 comprend un planétaire 36 intérieur (ou solaire), des satellites 37, un porte-satellites 38 et une couronne extérieure 39 (planétaire extérieur). Dans le présent exemple, le planétaire 36 est centré sur l'axe longitudinal X et est couplé en rotation avec l'arbre de puissance (ici l'arbre basse pression 9) suivant l'axe longitudinal X. Ce dernier comprend des premiers éléments destinés à coopérer avec des seconds éléments d'accouplement complémentaires portés par le planétaire 36 intérieur. Les satellites 37 (sous forme de pignons) sont portés par le porte-satellites 38 et tournent chacun autour d'un axe sensiblement parallèle à l'axe longitudinal X. Chacun des satellites 37 engrène avec le planétaire 36 intérieur et la couronne extérieure 39. Les satellites 37 sont disposés radialement entre le planétaire intérieur 36 et la couronne extérieure 39. Dans le présent exemple, il est prévu trois satellites 37. Bien entendu, le réducteur de vitesse 34 peut comprend un nombre de satellites supérieur à trois.

De manière avantageuse, la couronne extérieure 39 est couplée en rotation avec l'arbre de soufflante 32. La couronne 39 est centrée sur l'axe longitudinal. De la sorte, le planétaire intérieur 36 forme l'entrée du réducteur de vitesse 34 tandis que la couronne extérieure 39 forme la sortie de celui-ci. Le porte-satellites 38 est en revanche fixe par rapport à la couronne 39. Le porte-satellites 38 est en particulier fixé à une structure fixe de la turbomachine via une virole de support 40. Cette dernière est rigidement fixée au carter d'entrée 18 de la turbomachine dans cet exemple de réalisation. La virole de support 40 est également fixée à un premier support de palier 41, fixe, solidaire du carter d'entrée 18. De manière alternative, le porte-satellites 38 est fixé sur une virole radialement interne du carter d'entrée 18 ou encore directement sur un support de palier 44. Ce support de palier 44 décrit ci-après est installé en amont du réducteur de vitesse.

Avantageusement, le troisième palier 15 est monté en aval du réducteur de vitesse 34. Des paliers de guidage à roulements sont agencés également en amont du réducteur de vitesse 34 pour guider l'arbre de soufflante 32 en rotation. Ces paliers sont également agencés dans l'enceinte de lubrification 35.

Nous pouvons voir également sur les figures 1 et 2, un premier palier de guidage 42 à roulements qui est disposé juste en amont du réducteur 34 de vitesse. Ce palier 42 comprend une bague interne portée par l'arbre de soufflante 32 et la bague externe est portée par une première semelle du support de palier 44. Les éléments roulants du palier 42 sont des billes. Un deuxième palier de guidage 43 à roulements est disposé en amont du palier 42. La bague externe du palier 43 est portée par une deuxième semelle du support de palier 44. La bague interne du palier 43 est portée par l'arbre de soufflante 32. Le support de palier 44 est fixe et est solidaire du carter d'entrée 18.

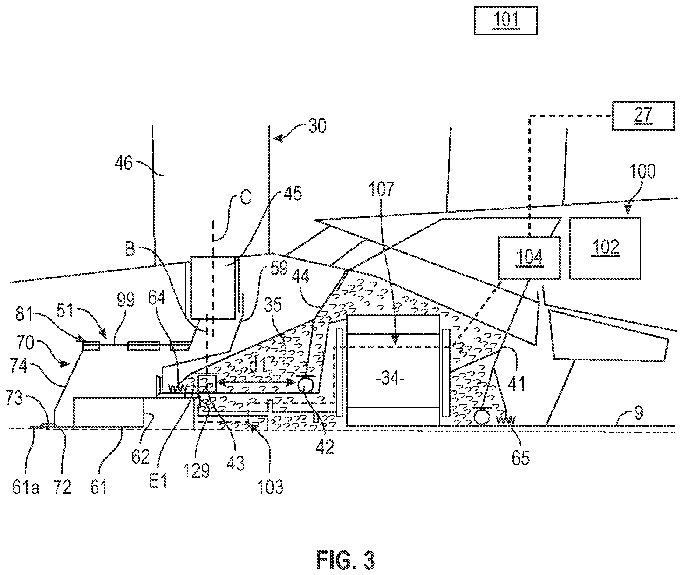

Sur les figures 2 et 3, les premier et deuxième paliers de guidage 42, 43 sont placés l'un par rapport à l'autre suivant une distance prédéterminée d1 au regard de l'axe longitudinal. Une telle configuration permet d'assurer une stabilité dynamique des aubes de soufflante 30 pendant le fonctionnement de la turbomachine car le diamètre des aubes de soufflante est important. Cela permet également de réduire les jeux au niveau de l'arbre de soufflante. La distance prédéterminée est au moins de 100 mm. Préférentiellement, la distance prédéterminée est d'au moins 150 mm voire au moins 170 mm.

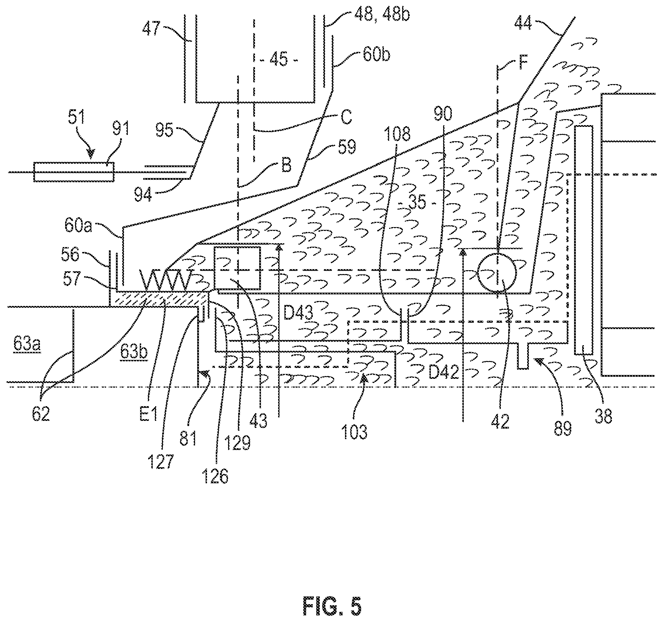

De manière avantageuse et plus précisément illustré sur la figure 5, le deuxième palier de guidage 43 présente un diamètre externe D43 inférieur au diamètre externe D42 du premier palier de guidage 42. Une telle configuration permet d'écarter le deuxième palier du premier palier (qui est à billes) de manière à diminuer la flexion de l'arbre de soufflante 32 (donc les désalignements). Cela permet en outre de réduire le porte à faux au niveau de l'extrémité amont de l'arbre de soufflante 32.

En référence à la figure 2, les aubes de soufflante 30 sont à calage variable. Chaque aube de soufflante 30 comprend un pied 45 et une pale 46 s'étendant radialement vers l'extérieur depuis le pied 45. Dans l'exemple de la figue 1, l'extrémité libre des pales est délimitée radialement par le carter de soufflante 19. Le pied 45 de chaque aube 30 se présente typiquement sous la forme d'un arbre ou manchon qui est monté pivotant suivant un axe de calage C dans un logement 47 interne d'un anneau 48. De manière alternative, le pied et la pale sont séparées, la pale s'emboîtant dans le pied via une liaison en queue d'aronde. L'anneau 48 est solidaire du rotor de soufflante 31, est centré sur l'axe longitudinal et comprend plusieurs logements 47 répartis régulièrement autour de l'axe X. Il y a autant de logements que de pied d'aubes. L'axe de calage C est parallèle à l'axe radial. L'arbre du pied 45 est monté pivotant grâce à deux paliers de guidage 49 montés dans chaque logement 47 et de manière superposée suivant l'axe radial Z. Ces paliers 49 sont de préférence, mais non limitativement, des paliers à roulements. Les éléments roulants de ces deux paliers 49 comprennent ici respectivement des billes.

Suivant un exemple de réalisation illustré sur la figure 3, le premier palier de guidage 42 est placé en aval de l'axe de calage C des aubes de soufflante 30 et le deuxième palier de guidage 43 est placé en amont de l'axe de calage. De la sorte, le bras de levier est évité et le rotor de soufflante présente une tolérance en rotation.

Suivant un autre exemple de réalisation de l'agencement de l'axe de calage par rapport aux paliers et tel qu'illustré sur les figures 1 et 2, le deuxième palier de guidage 43 est situé en aval de l'axe de calage. Dans ce cas, le deuxième palier de guidage 43 est placé proche de l'axe de calage des aubes de soufflante. De la sorte, le bras de levier est limité.

En particulier, le palier de guidage 43 présente un axe B passant par un plan médian de la longueur axiale du palier qui est situé à une distance maximale (dm) prédéterminée de l'axe de calage. Une telle distance est comprise entre 10 mm et 50 mm.

Le calage des aubes de soufflante est réalisé grâce à un système de changement de pas 50 installé dans le rotor de soufflante 31. Celui-ci est agencé en particulier en amont du réducteur de vitesse 34. Le système de changement de pas 50 comprend au moins un mécanisme de liaison 51 relié aux aubes de soufflante 30 et un moyen de commande 52 agissant sur le mécanisme de liaison 51.

Le moyen de commande 52 comprend un corps, fixe, annulaire 53 et un corps mobile 54 par rapport au corps annulaire 53. Avantageusement, mais non limitativement, le moyen de commande 52 est un actionneur linéaire d'axe coaxial à l'axe longitudinal X. Le corps annulaire 53 est solidaire en rotation de l'arbre de soufflante 32. Le corps mobile 54 se déplace en translation le long de l'axe longitudinal X par rapport au corps annulaire 53. Le corps annulaire 53 est donc tournant mais non translatant. Plus précisément encore et suivant cet exemple de réalisation, le corps annulaire 53 est cylindrique, centré sur l'axe X, et de section circulaire. Une telle configuration permet de limiter l'encombrement du moyen de commande dans le rotor de soufflante 31 tant axialement que radialement. Le corps annulaire 53 s'étend radialement autour du corps mobile 54.

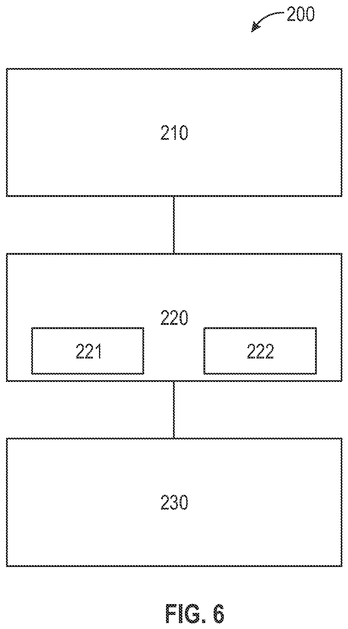

Sur les figures 2 et 6, le corps annulaire 53 comprend de manière avantageuse, mais non limitativement, une première bride 56 qui est fixée à une deuxième bride 57 d'un tourillon 58. En particulier, le corps annulaire comprend une virole 55 qui s'étend radialement vers l'extérieur depuis une surface externe 53a du corps annulaire 53. La virole 55 comprend la première bride 56 formant son extrémité libre. Le tourillon 58 est fixé sur la paroi externe de l'arbre de soufflante 32 grâce à des éléments de fixation adéquats. L'anneau 48 de maintien des aubes est également relié à l'arbre de soufflante 32 par l'intermédiaire d'un cône de soufflante 59 mobile en rotation. A cet effet, le cône de soufflante 59 comprend une troisième bride radiale 60a qui est fixée à la bride 57 du tourillon. Les trois brides 56, 57 et 60a sont fixées ensemble par des organes de fixation tels que des vis, écrous, boulons, goujons ou éléments analogues. Telle qu'illustrée sur la figure 2, la bride 57 est installée axialement entre la bride 56 et la bride 60a. Le cône de soufflante 59 comprend d'autre part, une patte radiale 60b qui est fixée à un flanc aval 48b de l'anneau 48. La fixation du cône de soufflante 59 en aval de l'anneau 48 permet l'intégration du mécanisme de liaison et de réduire l'encombrement axial. L'anneau 48 comprend également un flanc amont 48a (opposé axialement au flanc aval 48b) qui est fixé au rotor de soufflante 31. En liant le corps annulaire 53 au rotor de soufflante (anneau 48 notamment), les efforts transitant du rotor de soufflante au moyen de commande et à un dispositif de transfert de fluide décrit plus loin dans la description, sont évités. Ici, le chemin d'effort passe directement du cône de soufflante 59 à l'arbre de soufflante 32 et aux paliers de guidage 42, 43 de l'arbre de soufflante.

Dans le présent exemple, le moyen de commande est un vérin muni d'un boîtier et d'un piston mobile dans un volume formé par le boîtier. En particulier, le corps mobile 54 se présente sous la forme d'une tige axiale 61 d'un piston qui s'étend entre une première extrémité 61a et une deuxième extrémité 61b. Le corps mobile 54 comprend en outre une paroi radiale 62 qui s'étend radialement vers l'extérieur depuis une face externe et autour de la tige 61. La paroi annulaire 62 est située au niveau de la deuxième extrémité 61b de la tige. Cette paroi annulaire 62 permet de délimiter deux chambres 63a, 63b à volume variable dans le corps annulaire 53 et qui sont opposées axialement. Le corps mobile 54 se déplace axialement sous l'action d'une commande du moyen de commande 52, et en particulier de la pression d'un fluide circulant dans chaque chambre 63a, 63b. Pour cela, le système de changement de pas 50 comprend des moyens d'alimentation assurant la commande de celui-ci et décrits plus loin dans la description. Le fluide reçu dans les chambres 63a, 63b est par exemple un fluide hydraulique sous pression, d'un système d'alimentation fluidique, de sorte que le corps mobile 54 occupe au moins deux positions. Bien entendu, le corps mobile 54 occupe plusieurs positions intermédiaires en fonction des différentes phases de vol de l'aéronef. Ces deux positions correspondent respectivement à la position d'inversion de poussée connue en anglais sous le terme « reverse » et à la position de mise en drapeau des aubes à calage variable. Le déplacement du corps mobile 54 suivant l'axe longitudinal X entraîne le mouvement du mécanisme de liaison 51, de telle manière que celui-ci engendre le pivotement et le calage des pales des aubes autour de l'axe de calage C.

Sur la figure 3, le système de changement de pas 50 comprend une pièce annulaire 70 qui présente une forme générale en cloche et qui permet de relier le mécanisme de liaison 51 au moyen de commande 52. En d'autres termes, la pièce annulaire 70 est agencée cinématiquement entre le corps mobile 54 et le mécanisme de liaison 51. Comme cela est illustré, la pièce annulaire 70 s'étend radialement à l'extérieur du corps annulaire 54. En particulier, la pièce annulaire 70 comprend une portion 71 proximale qui est solidaire du corps mobile 54 du moyen de commande 52. Des moyens de couplage 79 sont avantageusement agencés entre le corps mobile 54 et la pièce annulaire 70 de sorte que ceux-ci soient solidaires en déplacement, et en particulier en translation. La portion 71 se présente sous la forme d'un disque centré sur l'axe longitudinal X. La portion 71 comprend un trou central qui traverse sa paroi de part et d'autre suivant l'axe longitudinal X. La tige 61 du corps mobile 54 traverse au moins en partie le trou central 72 de la portion 71 qui est fixée sur la tige 61. La première extrémité 61a de la tige s'étend en amont de la portion 71 et à l'extérieur de la pièce annulaire 70. Les moyens de couplage 79 (cf. figure 2) comprennent des premières cannelures (non représentées) qui sont formées sur une paroi radialement externe de la tige 61 et au voisinage de la première extrémité 61a. Ces premières cannelures s'engagent avec des deuxièmes cannelures (non représentées) correspondantes de la portion 71. Ces deuxièmes cannelures sont formées sur une paroi radialement interne du trou central 72. Un organe de serrage 73 tel qu'un écrou est monté sur la paroi externe de la tige 61 et contre la portion 71. L'organe de serrage 73 permet de verrouiller axialement la portion 71 sur la tige 61. La pièce annulaire 70 comprend une portion centrale 74 qui a une première extrémité reliée à la portion proximale 71 et qui s'étend vers l'aval en s'évasant. La portion centrale 74 présente une section axiale sensiblement tronconique. La pièce annulaire 70 comprend de manière avantageuse une quatrième bride 75 (illustrée précisément sur la figure 2) qui s'étend radialement vers l'extérieur depuis une surface externe de la portion centrale 74. La bride 75 comprend des moyens d'attache 81, fixes, du mécanisme de liaison 51. Les moyens d'attache 81 s'étendent sensiblement axialement depuis une face latérale 76 de la bride 75.

La pièce annulaire 70 comprend un diamètre interne maximal qui est supérieur au diamètre externe de la bride 56 du corps annulaire du moyen de commande. Cela permet de faciliter l'intégration et les mouvements du moyen de commande et du mécanisme de liaison.

Suivant un mode de réalisation non représenté, la pièce annulaire 70 est ajourée de manière à alléger la masse celle-ci et réduire la traînée. En particulier, des lumières traversantes, et présentant une forme allongée, sont réalisées dans la portion centrale 74 de la pièce annulaire 70.

Sur la figure 2, le mécanisme de liaison 51 comprend de manière avantageuse, mais non limitativement, plusieurs biellettes 91. Une des biellettes est illustrée par exemple sur cette figure 2. Chaque biellette 91 comprend une première extrémité 92a et une deuxième extrémité 92b opposées suivant la direction d'allongement de la biellette 91. La direction d'allongement est ici sensiblement parallèle à l'axe longitudinal (en situation d'installation). La première extrémité 92a est reliée aux moyens d'attache 81 solidaire de la pièce annulaire 70. Les moyens d'attaches 81 comprennent ici des chapes formées chacune de deux oreilles 93a, 93b. Les deux oreilles de chaque chape sont traversées par un axe d'articulation 94 sensiblement parallèle à l'axe radial et autour duquel pivote une biellette 91. La deuxième extrémité 92b de chaque biellette 91 est articulée à une fourchette 95a prévue à l'extrémité libre d'un bras 95 (cf. figure 2) relié au pied 45 d'une aube de soufflante. Le bras 95 forme un excentrique. Les biellettes 91 sont réalisées dans un matériau métallique. Il y a autant de biellettes que d'aubes de soufflante.

De manière avantageuse, les biellettes 91 sont chacune réglables en longueur. Typiquement, chaque biellette 91 comprend un axe intermédiaire fileté (non représenté) s'étendant entre une première extrémité et une deuxième extrémité. La première extrémité de l'axe intermédiaire est vissée dans un orifice taraudé d'une première portion de biellette (pourvue d'une des première et deuxième extrémités 92a, 92b de la biellette). La deuxième extrémité de l'axe intermédiaire est vissée également dans un orifice taraudé d'une deuxième portion de biellette (avec l'autre des première et deuxième extrémités 92a, 92b de la biellette). Cette configuration permet de régler le calage des aubes les unes par rapport aux autres. Les calages sont ainsi finement ajustés malgré les défauts de fabrication, de tolérance et de vieillissement pouvant affecter les différentes pièces constituant la soufflante et le système de changement de pas. La virole annulaire 80 permet de conserver le réglage malgré le démontage du moyen de commande 52 (vérin).

En référence à la figure 3 et comme nous l'avons annoncé précédemment, la turbomachine comprend de manière avantageuse, un système d'alimentation fluidique 100 permettant de distribuer un fluide de lubrification vers les différents organes et/ou équipements qui en ont besoin tels que le moyen de commande 52, les paliers, etc. Le fluide est avantageusement de l'huile sous pression. Le système d'alimentation 100 comprend une source d'alimentation 101 (ou un réservoir, illustrée schématiquement sur les figures 1 et 5), une pompe hydraulique 102 permettant de faire circuler l'huile vers les organes et/ou équipements depuis la source d'alimentation 101 et une servovalve 104 permettant de réguler la pression d'huile dans le moyen de commande 52 suivant le calage nécessaire. La source d'alimentation 101 est agencée dans un repère fixe de la turbomachine et de manière générale dans la nacelle 20 illustrée sur la figure 1 ou dans le carter inter-veine 22. La pompe 102 et la servovalve 104 sont également disposées dans le repère fixe de la turbomachine. Avantageusement, la pompe 102 et la servovalve 104 sont agencées dans le carter inter-veine 22. La pompe 102 peut être par exemple entraînée par un boîtier d'accessoire (non représenté) connu sous la désignation anglaise « Accessory Gear Box » et qui est monté dans la nacelle 20 ou dans la « zone core » de la turbomachine. La « zone core » est située dans le carter inter-veine 22 (soit entre la veine primaire 23 et la veine secondaire 25). De plus, la « zone core » est considérée comme une zone feu. Comme le vérin hydraulique est généralement un vérin actionné avec du carburant, on peut conserver le vérin à l'intérieur de la zone feu définie par la zone core. Quant à la servovalve 104, celle-ci est pilotée électriquement par un calculateur électronique 27 de la turbomachine qui est connu sous le sigle « ECU » pour « Electronic Control Unit ».

En référence à la figure 2, la turbomachine comprend un dispositif de transfert de fluide 103 entre un stator et un rotor monté dans le système d'alimentation. Le moyen de commande 52 étant situé dans un repère tournant, le dispositif de transfert de fluide 103 ou palier de transfert d'huile permet le transfert d'huile du repère fixe au repère tournant de la turbomachine 1. Ce dispositif de transfert 103 est connu sous le sigle anglais « OTB » pour « Oil transfert Bearing ». Le dispositif de transfert 103 de fluide est agencé en amont du réducteur de vitesse 34 suivant la figure 2. L'emplacement du dispositif de transfert 103 de fluide est avantageux car celui-ci permet de faciliter son démontage/montage sans intervenir sur le réducteur de vitesse. Le système d'alimentation 100 comprend également plusieurs canaux d'alimentation pour acheminer l'huile vers les organes et/ou équipements. Les canaux sont reliés à la servovalve 104. Sur la figure 2, un premier canal 107a et un deuxième canal 107b (représentés partiellement) traversent le porte-satellites 38 et sont reliés au dispositif de transfert d'huile 103. Le porte-satellites 38 immobile en rotation autorise le passage des canaux 107a, 107b à travers celui-ci ainsi qu'à l'intérieur de l'arbre de soufflante 32.

Sur les figures 2 et 3, le dispositif de transfert 103 s'étend à l'intérieur de l'arbre de soufflante 32 (qui est creux) de manière à réduire l'encombrement axial et radial. En particulier, l'encombrement est avantageusement réduit en amont où se trouve le moyen de commande 52. Le dispositif 103 comprend une partie stator 105 et une partie rotor 112. La partie stator 105 est montée solidaire d'une structure fixe de la turbomachine. Dans le présent exemple, la partie stator 105 est fixée au porte-satellites 38 via un élément tubulaire 89. Ce dernier est configuré de manière à réaliser une « liaison souple » entre la partie stator 105 et le porte-satellites 38 ici. De la sorte, les risques de désalignements et de contraintes entre la partie rotor et la partie stator sont réduits. Dans le même but, le premier canal 107a et le deuxième canal 107b sont agencés en « tire-bouchon » de façon à gérer les désalignements induits par le réducteur de vitesse 34. D'autres systèmes d'alimentation du dispositif de transfert 103 peuvent être envisagés pour permettre des degrés de liberté entre celui-ci et le réducteur de vitesse et accommoder leurs déplacements relatifs.

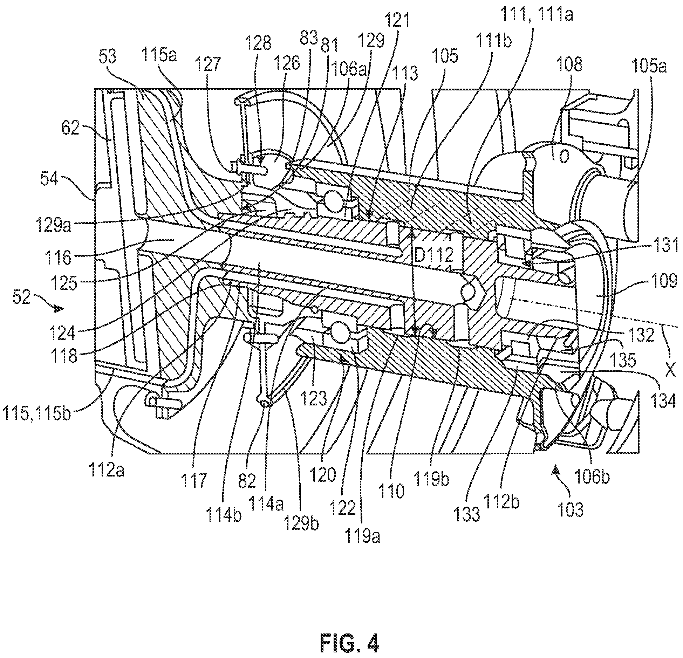

Sur la figure 4, la partie stator 105 est cylindrique et centrée sur l'axe longitudinal X. Plus précisément, la partie stator 105 s'étend entre une première extrémité 106a et une deuxième extrémité 106b suivant l'axe longitudinal X. La partie stator 105 comprend une paroi de fond 109 qui est située à la deuxième extrémité 106b. La première extrémité 106a est ouverte et débouche à l'intérieur de la partie stator 105 dans un alésage central qui est délimité par une surface cylindrique interne 110. La partie stator 105 comprend une septième bride 108 radiale qui s'étend radialement vers l'extérieur depuis la surface externe cylindrique de la partie stator 105. La bride 108 est fixée à une collerette 90 (cf. figure 2) de l'élément tubulaire 89 via des organes de fixation tels que des pions 80 ou encore des vis et écrous. Les pions 80 évitent la rotation de la partie stator par rapport à la partie rotor.

La partie stator 105 comprend des premières canalisations 111 qui débouchent dans la surface interne cylindrique 110. La partie stator 105 comprend avantageusement, mais non limitativement deux premières canalisations 111a, 111b (représentées en pointillé sur la figure 4) qui s'étendant dans l'épaisseur de la partie stator. Ces deuxièmes canalisations sont annulaires. La partie stator 105 comprend également un premier port 105a qui s'étend depuis une surface cylindrique externe de la partie stator. Le premier port 105a est connecté à une extrémité du premier canal 107a. La partie stator 105 comprend également un deuxième port 105b qui s'étend depuis la surface cylindrique externe de celle-ci et qui est connecté au deuxième canal 107b.

Sur la figure 4, la partie rotor 112 est engagée à l'intérieur de la partie stator 105. La partie rotor une fois montée à l'intérieur de la partie stator 105 forme un ensemble (ou une cartouche) qui est monté sur le moyen de commande 52. La partie rotor 112 présente également une forme cylindrique. La partie rotor 112 s'étend suivant l'axe longitudinal X entre une extrémité amont 112a et une extrémité aval 112b. L'extrémité aval 112b est en regard de la paroi de fond 109 de la partie stator 105. La partir rotor 112 est mobile en rotation à l'intérieur de la partie stator 105 suivant l'axe longitudinal. La partie rotor 112 comprend une surface cylindrique externe 113 en regard de la surface cylindrique interne 110 de la partie stator 105. Le diamètre externe D112 de la surface cylindrique interne 110 est sensiblement égal au diamètre de la surface cylindrique externe 113 (tout en permettant la rotation de la partie rotor 112 dans la partie stator 105).

La partie rotor 112 comprend en outre des deuxièmes canalisations 114 qui débouchent chacune dans la surface cylindrique externe 113 via des orifices 119. Ces deuxièmes canalisations 114 sont en communication fluidique avec les premières canalisations 111a, 111b de la partie stator. Les deuxièmes canalisations 114 sont connectées fluidiquement avec les moyens d'alimentation du moyen de commande 52. Les deuxièmes canalisations 114 comprennent une canalisation externe 114a s'étend dans l'épaisseur de la paroi de la partie rotor 112. La canalisation externe 114a comprend une portion radiale qui est couplée à un orifice 119a et une portion axiale qui s'étend en majeur partie suivant l'axe longitudinal X. L'orifice 119a est en regard de la première canalisation 111b, (ici première canalisation amont 111b). La portion axiale de la canalisation externe 114a débouche dans une surface amont de l'extrémité amont 112a de la partie rotor 112.

Avantageusement, la canalisation externe 114a est annulaire. Avantageusement, mais non limitativement, la canalisation externe 114 se présente sous la forme deux canalisations externes semi-annulaires. Les deuxièmes canalisations 114 comprennent une canalisation centrale 114b qui s'étend également dans l'épaisseur de la partie rotor 112. La canalisation centrale 114b comprend une portion radiale qui débouche dans un orifice 119b et une portion centrale qui s'étend suivant l'axe longitudinal. L'orifice 119b est en regard de la première canalisation 111a (ici première canalisation aval 111b). La portion centrale de la canalisation centrale 114b est coaxiale avec l'axe de la partie rotor 112. La portion centrale débouche dans la face amont de l'extrémité amont 112a. La canalisation externe 114a s'étend radialement à l'extérieur de la canalisation centrale 114b, interne.

La partie rotor 112 est solidaire en rotation du moyen de commande 52, et ici plus particulièrement du corps annulaire 53 de celui-ci. Cela permet d'une part, de fournir un système compact et d'autre part, de faciliter le montage et le démontage du dispositif de transfert par rapport au moyen de commande. A cet effet, le corps annulaire 53 comprend une face aval 81 dans laquelle est défini un trou 117. Le trou 117 présente un fond d'appui 118 qui est défini dans un plan perpendiculaire à l'axe longitudinal. L'extrémité amont 112a de la partie rotor est logée dans le trou 117. La face amont de l'extrémité amont 112a est en butée contre la surface d'appui 118. La partie rotor 112 comprend également une bride radiale 126 qui est fixée sur une bride radiale 127 du corps annulaire 153. En particulier, la bride radiale 126 est solidaire d'un manchon 124 qui est monté rigidement sur la partie rotor 112, au niveau de l'extrémité amont 112a de la partie rotor 112. Le manchon 124 présente un corps cylindrique creux et la bride 126 s'étend radialement vers l'extérieur depuis le corps du manchon. La bride radiale 127 du corps annulaire 53 s'étend radialement autour de la face aval 81. Les brides 126, 127 sont fixées ensemble par des organes de fixation 128 tels que des vis, écrous, ou éléments analogues. Une telle fixation permet soit de monter/démonter le moyen de commande 52 équipé du dispositif de transfert 103 de fluide, soit de monter/démonter le moyen de commande et le dispositif de transfert de fluide indépendamment.

En référence aux figures 4 et 5, un système d'étanchéité est monté entre le dispositif de transfert 103 et le moyen de commande 52 de manière à éviter les fuites d'huile vers le moyen de commande. Le système d'étanchéité permet de créer deux enceintes distinctes et hermétiques l'une de l'autre, une enceinte amont E1 (référencée sur la figure 5 schématique) dans laquelle est agencé le moyen de commande 52 et une enceinte aval qui est l'enceinte de lubrification 35 dans laquelle est agencé au moins le dispositif de transfert 103. Le système d'étanchéité comprend une paroi 129 se présentant sous la forme d'un disque défini dans un plan perpendiculaire à l'axe longitudinal X. La paroi 129 comprend une ouverture centrale délimitant un bord interne 129a qui est fixé entre les brides 126, 127 via les organes de fixation 128. La paroi 129 comprend également un bord externe 129b qui est en contact avec une paroi interne cylindrique 130 (référencée sur la figure 2) de l'arbre de soufflante 32. Le diamètre externe de la paroi 129 est sensiblement égal (+/- 0,5 mm) au diamètre interne minimal de l'arbre de soufflante 32. Un joint d'étanchéité annulaire 82 est installé entre le bord externe 129b et la paroi interne cylindrique 130. En cas de fuite d'huile au niveau du moyen de commande, l'huile est récupérée dans l'enceinte amont E1 représentée sur les figures 2 et 3 et qui est délimitée par la virole 55, le tourillon 58, une portion du corps annulaire 53 et la paroi 129 d'étanchéité.

Sur la figure 3, l'étanchéité de l'enceinte de lubrification 35 est préservée par des moyens d'étanchéité. Ces moyens d'étanchéité (représentés schématiquement) comprennent un joint amont 64 monté entre le support de palier 44 et l'arbre de soufflante 32 et un joint aval 65 monté entre le support de palier 41 et l'arbre basse pression 9.

En référence à la figure 4, les moyens d'alimentation du moyen de commande 52 comprennent des conduites ménagées dans l'épaisseur de corps annulaire 53. Plus précisément, les moyens d'alimentation comprennent une première conduite 115 qui débouche d'une part, dans la face aval 81 et d'autre part, dans le corps annulaire 53. La première conduite 115 comprend une portion sensiblement radiale 115a qui est agencée en aval des chambres 63a et 63b et une portion axiale 115b qui s'étend le long des chambres 63a, 63b du corps annulaire 53. La portion axiale 115b débouche dans la chambre 63a, en amont. La première conduite 115 est couplée à la canalisation externe 114a. Les moyens d'alimentation comprennent une deuxième conduite 116 qui s'étend suivant l'axe longitudinal et est coaxiale avec l'axe du corps annulaire. La conduite 116 débouche dans la face aval et notamment dans le trou 117. Le trou 117 et la deuxième conduite 116 sont coaxiaux. La deuxième conduite 116 débouche d'autre part dans le corps annulaire et en particulier dans la chambre 63b. La deuxième conduite 116 est couplée à la canalisation 114b (lorsque la partie rotor est couplée au moyen de commande). La deuxième conduite 116 et la canalisation centrale 114b sont coaxiales et présentent une section circulaire. Celles-ci sont également de même diamètre.

La partie rotor 112 est montée rotative par rapport à la partie stator 105 au moyen de paliers. Ces paliers sont disposés de part et d'autre axialement des orifices 119a, 119b de manière à réaliser une étanchéité hydrostatique. Un autre moyen d'étanchéité est bien entendu envisageable. Dans cet exemple, un premier palier 120 est monté en amont des orifices 119a, 119b formés dans la surface cylindrique externe 113 et par lesquels débouchent les canalisations 114a, 114b. Le premier palier 120 est à roulements. Celui-ci comprend une bague interne 121 qui est portée par la surface cylindrique externe 113 et une bague externe 122 qui est portée par la surface cylindrique interne de la partie stator 105. La bague externe 122 est bloquée axialement d'une part, par une portée cylindrique, et d'autre part, par un écrou ou une frette 123. Entre la frette et une portion de surface interne cylindrique, au niveau de l'extrémité 106a, est prévu un élément d'étanchéité tel qu'un joint annulaire 83. La bague interne 121 est portée par la surface cylindrique externe 110 de la partie rotor 112. La bague interne 121 est bloquée axialement d'une part, par une portée cylindrique, et d'autre part, par le manchon 124 cylindrique. Le manchon 124 cylindrique est bloqué en amont par une frette ou un écrou 125. Les éléments roulants montés entre les bagues sont des billes.

Un deuxième palier 131 est également monté entre la partie rotor 112 et la partie stator 105 du dispositif de transfert. Le deuxième palier 131 est également un palier à roulements. Les éléments roulants de ce palier 131 sont des rouleaux. Ce palier 131 est monté en aval du premier palier 120 et notamment en aval des orifices formés dans la surface cylindrique externe 113. Le deuxième palier 131 comprend une bague interne 132 et une bague externe 133. La bague externe 133 est portée par la surface cylindrique interne 113. La bague externe 133 est bloquée axialement en amont par une portée cylindrique et en aval par une frette ou un écrou 134. La bague interne 132 est portée par la surface cylindrique externe 113. Celle-ci est bloquée en amont par une portée cylindrique et en aval par une frette un ou un écrou 135. Les éléments roulants montés entre les bagues sont des rouleaux.

Dans le présent exemple, le diamètre externe du premier palier 120 est supérieur au diamètre externe du deuxième palier 131. Cependant, le diamètre externe du premier palier est inférieur au diamètre externe du corps annulaire 53 du moyen de commande 52. De la sorte, le diamètre de ce palier 120 est plus faible que ceux des paliers de l'art antérieur. Cela permet de réduire le jeu et de limiter le cisaillement de l'huile qui d'une part, réduit son échauffement et d'autre part, diminue les besoins d'évacuation des calories. De même, avec cette configuration, le premier palier 121 (à billes) ne reprend pas d'effort axial (ce qui permet d'avoir des roulements, ici des billes, de faible dimension). Par ailleurs, un dispositif de transfert d'huile d'un faible diamètre (tel inférieur au diamètre du moyen de commande 52) pourrait permettre de décontraindre le diamètre des premier et deuxième paliers (qui seront obligatoirement monter serrer à plus haut diamètre).

De manière alternative, les diamètres externes des premier et deuxièmes paliers 120, 131 sont sensiblement identiques.

Nous allons décrire ci-après un procédé 200 de montage du module de turbomachine tel que décrit précédemment. Les étapes du procédé 200 de montage sont représentées sur la figure 6. En particulier, le procédé de montage comprend une étape de fixation 220 du dispositif de transfert de fluide sur le moyen de commande et une étape de mise en place 230 du moyen de commande dans le rotor de soufflante. Préalablement à l'étape de fixation 220, le procédé comprend une étape d'assemblage 210 du dispositif de transfert. Cette étape 210 comprend l'insertion ou l'engagement de la partie rotor 112 dans la partie stator 105. L'étape de fixation 220 comprend une sous étape d'insertion 221 de l'extrémité amont 112a dans le trou 117 situé dans la face aval du corps annulaire 53. L'étape 220 comprend également une sous étape de fixation 222 des brides 126 et 127. La paroi d'étanchéité 129 est installée préalablement entre les bride 126, 127. Lors de l'étape de mise en place 220, le moyen de commande 52 équipé du dispositif de transfert 103 est déplacé vers l'aval dans le rotor de soufflante. Ensuite, la bride 108 est fixée sur la collerette 90 de l'élément tubulaire 89 déjà installé préalablement. Puis, le moyen de commande 52 est fixé à l'arbre de soufflante 32 via les brides 56, 57, 60a. La pièce annulaire 70 peut être fixée au corps mobile 54 et aux biellettes 91. De la sorte, le fluide, l'huile, peut circuler depuis la source d'alimentation 101 vers le moyen de commande 52 en passant d'une part, par le réducteur de vitesse 34, et d'autre part, par le dispositif de transfert 103 de fluide. L'agencement du dispositif de transfert 103 d'huile en amont du réducteur de vitesse 34 facilite son montage et le démontage.

## Revendications

1. Module de turbomachine d'axe longitudinal (X), comportant :
- une soufflante (3) destinée à être entrainée en rotation autour de l'axe longitudinal (X) par un arbre de soufflante (32), la soufflante (32) comprenant une pluralité d'aubes de soufflante (30) à calage variable pouvant pivoter chacune autour d'un axe de calage (C),
- un réducteur de vitesse (34) relié à l'arbre de soufflante (32) qui est guidé en rotation par au moins un premier palier de guidage (42) à roulements et un deuxième palier de guidage (43) à roulements qui sont situés en amont du réducteur de vitesse (34),
- un système de changement de pas (50) des aubes de soufflante (30) comprenant un mécanisme de liaison (51) relié aux aubes de la soufflante (30) et un moyen de commande (52) agissant sur le mécanisme de liaison (51), le moyen de commande (52) étant agencé en amont du réducteur de vitesse (34), et comportant un corps annulaire (53) solidaire en rotation de l'arbre de soufflante (32) et un corps mobile (54), par rapport audit corps annulaire (53), qui est relié au mécanisme de liaison (51),
- un dispositif de transfert (103) de fluide qui est configuré pour alimenter le moyen de commande (52) et qui est agencé en amont du réducteur de vitesse (34),
le réducteur de vitesse (34) étant à train d'engrenage planétaire, et en ce que le dispositif de transfert (103) de fluide est monté sur le moyen de commande (52) et comporte une partie stator (105) solidaire d'une structure fixe de la turbomachine,
**caractérisé en ce que** le moyen de commande est agencé en amont des premier et deuxième paliers de guidage (42, 43), et **en ce que** le dispositif de transfert (103) de fluide comporte une partie rotor (112) engagée dans la partie stator (105), la partie rotor (112) étant solidaire en rotation du corps annulaire (53) du moyen de commande (52).

2. Module de turbomachine selon la revendication précédente, **caractérisé en ce que** le réducteur de vitesse (34) comporte un porte-satellites (38) immobile en rotation et une couronne (39) qui est couplée à l'arbre de soufflante (32).

3. Module de turbomachine selon l'une quelconque des revendications précédentes, **caractérisé en ce que** le premier palier de guidage (42) et le deuxième palier de guidage (43) sont placés l'un par rapport à l'autre suivant une distance prédéterminée (d1) au regard de l'axe longitudinal.

4. Module de turbomachine selon l'une quelconque des revendications précédentes, **caractérisé en ce que** le deuxième palier de guidage (43) est placé en amont du premier palier de guidage (42) et le deuxième palier de guidage (43) présente un diamètre externe inférieur au diamètre externe du premier palier.

5. Module de turbomachine selon l'une quelconque des revendications précédentes, **caractérisé en ce que** le premier palier de guidage (42) est placé en aval de l'axe de calage (C) des aubes de soufflante (30) et le deuxième palier de guidage (43) est placé en amont de l'axe de calage (C).

6. Module de turbomachine selon l'une quelconque des revendications 1 à 4, **caractérisé en ce que** le deuxième palier de guidage (43) est placé proche de l'axe de calage (C) des aubes de soufflante (30) avec une distance maximale (dm) prédéterminée entre l'axe de calage (C) et un axe (B) du deuxième palier (43) passant par un plan médian de la longueur axiale du palier.

7. Module de turbomachine selon l'une quelconque des revendications précédentes, **caractérisé en ce que** le corps annulaire (53) comprend une face aval (81) dans laquelle est défini un trou (117) qui est centré sur l'axe longitudinal et la partie rotor (112) du dispositif de transfert (103) comprend une extrémité amont (112a) qui est logée dans le trou (117).

8. Module de turbomachine selon la revendication précédente, **caractérisé en ce que** le corps annulaire (53) comprend une bride radiale (127) s'étendant autour de la face aval (81) et qui est fixée sur une bride radiale (126) de la partie rotor (112) du dispositif de transfert (103) de fluide, une paroi d'étanchéité (129) s'étendant au moins en partie entre les brides radiales (126, 127) et comprenant un bord externe (129b) en contact étanche avec une paroi interne cylindrique (130) de l'arbre de soufflante.

9. Module de turbomachine selon l'une quelconque des revendications précédentes, **caractérisé en ce que** le dispositif de transfert (103) de fluide s'étend au moins en partie à l'intérieur de l'arbre de soufflante (32).

10. Module de turbomachine selon l'une quelconque des revendications 2 à 9, **caractérisé en ce que** la partie stator (105) du dispositif de transfert (103) de fluide est fixée au porte-satellites (38) traversé par au moins un premier canal (107a) d'alimentation et un deuxième canal (107b) d'alimentation.

11. Module de turbomachine selon l'une quelconque des revendications 7 à 10, **caractérisé en ce que** le moyen de commande (52) comprend une première chambre (63a) et une deuxième chambre (63b) à volumes variables, et des moyens d'alimentation des première et deuxième chambres qui sont formés dans le corps annulaire, les moyens d'alimentation comprenant au moins une première conduite (115) débouchant dans la première chambre (63a) et au moins une deuxième conduite (116) débouchant dans la deuxième chambre (63b), la première conduite (115) et la deuxième conduite (116) débouchant également dans la face aval (81) du corps annulaire (53).

12. Module de turbomachine selon la revendication précédente, **caractérisé en ce que** la partie stator (105) comprend une surface cylindrique interne (110) et des premières canalisations (111) débouchant dans la surface cylindrique interne (110), la partie rotor (112) comprenant une surface cylindrique externe (113) dans laquelle débouchent des deuxièmes canalisations (114), les deuxièmes canalisations (114) étant couplées respectivement avec les premières et deuxièmes conduites (115, 116) du corps annulaire (53).

13. Module de turbomachine selon l'une quelconque des revendications précédentes, **caractérisé en ce que** le corps mobile (54) se déplace en translation suivant l'axe longitudinal.

14. Module de turbomachine selon l'une quelconque des revendications précédentes, **caractérisé en ce que** le système de changement de pas (50) comprend une pièce annulaire (70) présentant une forme générale en cloche et reliant le mécanisme de liaison (51) au moyen de commande (52), la pièce annulaire (70) s'étendant radialement à l'extérieur du moyen de commande (52).

15. Turbomachine d'aéronef comprenant au moins un module de turbomachine selon l'une quelconque des revendications précédentes.

## Patentansprüche

1. Modul eines Turbotriebwerks mit einer Längsachse (X), umfassend:
- ein Gebläse (3), das dazu bestimmt ist, von einer Gebläsewelle (32) um die Längsachse (X) in Drehung angetrieben zu werden, wobei das Gebläse (32) eine Vielzahl von Gebläseschaufeln (30) mit variabler Feststellposition umfasst, die jeweils um eine Feststellachse (C) schwenkbar sind,
- ein Untersetzungsgetriebe (34), das mit der Gebläsewelle (32) verbunden ist, die durch mindestens ein erstes Führungswälzlager (42) und ein zweites Führungswälzlager (43) drehbar geführt wird, die sich stromaufwärts des Untersetzungsgetriebes (34) befinden,
- ein Steigungsänderungssystem (50) der Gebläseschaufeln (30), das einen mit den Gebläseschaufeln (30) verbundenen Verbindungsmechanismus (51) und ein auf den Verbindungsmechanismus (51) einwirkendes Steuermittel (52) umfasst, wobei das Steuermittel (52) stromaufwärts des Untersetzungsgetriebes (34) angeordnet ist und einen mit der Gebläsewelle (32) drehfest verbundenen Ringkörper (53) sowie einen gegenüber dem Ringkörper (53) beweglichen Körper (54) umfasst, der mit dem Verbindungsmechanismus (51) verbunden ist,
- eine Fluidübertragungsvorrichtung (103), die zur Versorgung des Steuermittels (52) konfiguriert ist und die stromaufwärts des Untersetzungsgetriebes (34) angeordnet ist, wobei das Untersetzungsgetriebe (34) ein Planetengetriebe ist und die Fluidübertragungsvorrichtung (103) auf dem Steuermittel (52) montiert ist und einen Statorabschnitt (105) umfasst, der fest mit einer festen Struktur des Turbotriebwerks verbunden ist,
**dadurch gekennzeichnet, dass** das Steuermittel stromaufwärts des ersten und des zweiten Führungslagers (42, 43) angeordnet ist und dass die Fluidübertragungsvorrichtung (103) einen Rotorabschnitt (112) umfasst, der in den Statorabschnitt (105) eingreift, wobei der Rotorabschnitt (112) drehfest mit dem Ringkörper (53) des Steuermittels (52) verbunden ist.

2. Turbotriebwerkmodul nach dem vorstehenden Anspruch, **dadurch gekennzeichnet, dass** das Untersetzungsgetriebe (34) einen drehfesten Planetenträger (38) und einen Zahnkranz (39) umfasst, der mit der Gebläsewelle (32) gekoppelt ist.

3. Turbotriebwerkmodul nach einem der vorstehenden Ansprüche, **dadurch gekennzeichnet, dass** das erste Führungslager (42) und das zweite Führungslager (43) in Bezug aufeinander in einem vorbestimmten Abstand (d1) hinsichtlich der Längsachse angeordnet sind.

4. Turbotriebwerkmodul nach einem der vorstehenden Ansprüche, **dadurch gekennzeichnet, dass** das zweite Führungslager (43) stromaufwärts des ersten Führungslagers (42) angeordnet ist und das zweite Führungslager (43) einen Außendurchmesser aufweist, der kleiner ist als der Außendurchmesser des ersten Führungslagers.

5. Turbotriebwerkmodul nach einem der vorstehenden Ansprüche, **dadurch gekennzeichnet, dass** das erste Führungslager (42) stromabwärts der Feststellachse (C) der Gebläseschaufeln (30) und das zweite Führungslager (43) stromaufwärts der Feststellachse (C) angeordnet ist.

6. Turbotriebwerkmodul nach Anspruch 1 bis 4, **dadurch gekennzeichnet, dass** das zweite Führungslager (43) nahe der Feststellachse (C) der Gebläseschaufeln (30) angeordnet ist, mit einem vorbestimmten maximalen Abstand (dm) zwischen der Feststellachse (C) und einer Achse (B) des zweiten Lagers (43), die durch eine Mittelebene der axialen Länge des Lagers verläuft.

7. Turbotriebwerkmodul nach einem der vorstehenden Ansprüche, **dadurch gekennzeichnet, dass** der Ringkörper (53) eine stromabwärts gelegene Seite (81) umfasst, in der ein Loch (117) ausgebildet ist, das auf die Längsachse zentriert ist, und der Rotorabschnitt (112) der Übertragungsvorrichtung (103) ein stromaufwärts gelegenes Ende (112a) umfasst, das in dem Loch (117) aufgenommen ist.

8. Turbotriebwerkmodul nach dem vorstehenden Anspruch, **dadurch gekennzeichnet, dass** der Ringkörper (53) einen Radialflansch (127) umfasst, der sich um die stromabwärtige Seite (81) erstreckt und an einem Radialflansch (126) des Rotorabschnitts (112) der Fluidübertragungsvorrichtung (103) befestigt ist, wobei eine Dichtungswand (129) sich zumindest teilweise zwischen den Radialflanschen (126, 127) erstreckt und eine Außenkante (129b) umfasst, die in dichtendem Kontakt mit einer zylindrischen Innenwand (130) der Gebläsewelle steht.

9. Turbotriebwerkmodul nach einem der vorstehenden Ansprüche, **dadurch gekennzeichnet, dass** sich die Fluidübertragungsvorrichtung (103) zumindest teilweise im Inneren der Gebläsewelle (32) erstreckt.

10. Turbotriebwerkmodul nach einem der Ansprüche 2 bis 9, **dadurch gekennzeichnet, dass** der Statorabschnitt (105) der Fluidübertragungsvorrichtung (103) an dem Planetenträger (38) befestigt ist, der von mindestens einem ersten Zuführkanal (107a) und einem zweiten Zuführkanal (107b) durchquert wird.

11. Turbotriebwerkmodul nach einem der Ansprüche 7 bis 10, **dadurch gekennzeichnet, dass** das Steuermittel (52) eine erste Kammer (63a) und eine zweite Kammer (63b) mit variablem Volumen und Zuführmittel der ersten und zweiten Kammer umfasst, die im Ringkörper ausgebildet sind, wobei die Zuführmittel mindestens eine erste Leitung (115), die in die erste Kammer (63a) mündet, und mindestens eine zweite Leitung (116), die in die zweite Kammer (63b) mündet, umfassen, wobei die erste Leitung (115) und die zweite Leitung (116) ebenfalls in die stromabwärts gelegene Seite (81) des Ringkörpers (53) münden.

12. Turbotriebwerkmodul nach dem vorstehenden Anspruch, **dadurch gekennzeichnet, dass** der Statorabschnitt (105) eine innere zylindrische Fläche (110) und erste Rohre (111) umfasst, die in die innere zylindrische Fläche (110) münden, wobei der Rotorabschnitt (112) eine äußere zylindrische Oberfläche (113) umfasst, in die zweite Rohre (114) münden, wobei die zweiten Rohre (114) jeweils mit den ersten und zweiten Leitungen (115, 116) des Ringkörpers (53) gekoppelt sind.

13. Turbotriebwerkmodul nach einem der vorstehenden Ansprüche, **dadurch gekennzeichnet, dass** sich der bewegliche Körper (54) entlang der Längsachse translatorisch bewegt.

14. Turbotriebwerkmodul nach einem der vorstehenden Ansprüche, **dadurch gekennzeichnet, dass** das Steigungsänderungssystem (50) eines ringförmige Werkstück (70) umfasst, das eine allgemein glockenförmige Gestalt aufweist und den Verbindungsmechanismus (51) mit dem Steuermittel (52) verbindet, wobei sich das ringförmige Werkstück (70) radial außerhalb des Steuermittels (52) erstreckt.

15. Turbotriebwerk eines Luftfahrzeugs, umfassend mindestens ein Turbomaschinenmodul nach einem der vorstehenden Ansprüche.

## Claims

1. Turbomachine module with a longitudinal axis (X), comprising:
- a fan (3) intended to be driven in rotation about the longitudinal axis (X) by a fan shaft (32), the fan (32) comprising a plurality of variable pitch fan vanes (30) each being adapted to pivot about a pitch axis (C),
- a speed reducer (34) connected to the fan shaft (32), which is guided in rotation by at least one first rolling guide bearing (42) and a second rolling guide bearing (43), which are located upstream of the speed reducer (34),
- a pitch change system (50) for the vanes of the fan (30) comprising a connection mechanism (51) connected to the vanes of the fan (30) and a control means (52) acting on the connection mechanism (51), the control means (52) being arranged upstream of the speed reducer (34) and comprising an annular body (53) integral in rotation with the fan shaft (32) and a movable body (54) which is movable with respect to said annular body (53) and which is connected to the connection mechanism (51),
- a fluid transfer device (103) which is configured to feed the control means (52) and which is arranged upstream the speed reducer (34),
the speed reducer (34) having a planetary gear train, and in that the fluid transfer device (103) is mounted on the control means (52), and comprises a stator portion (105) integral with a stationary structure of the turbomachine,
**characterized in that** the control means (52) is arranged upstream of the first rolling guide bearing (42) and a second rolling guide bearing (43), and **in that** the fluid transfer device (103) comprises a rotor portion (112) engaged in the stator portion (105), the rotor portion (112) being integral in rotation with the annular body (53) of the control means (52).

2. Turbomachine module according to the preceding claim, **characterised in that** the speed reducer (34) comprises a planet carrier (38) that is immovable in rotation and a ring gear (39) that is coupled to the fan shaft (32).

3. Turbomachine module according to any one of the preceding claims, **characterised in that** the first guide bearing (42) and the second guide bearing (43) are placed with respect to each other at a predetermined distance (d1) from the longitudinal axis.

4. Turbomachine module according to any one of the preceding claims, **characterised in that** the second guide bearing (43) is located upstream of the first guide bearing (42) and the second guide bearing (43) has an external diameter smaller than the external diameter of the first bearing.

5. Turbomachine module according to any of the preceding claims, **characterised in that** the first guide bearing (42) is placed downstream of the pitch axis (C) of the vanes of the fan (30) and the second guide bearing (43) is placed upstream of the pitch axis (C).

6. Turbomachine module according to any one of claims 1 to 4, **characterised in that** the second guide bearing (43) is placed close to the pitch axis (C) of the vanes of the fan (30) with a predetermined maximum distance (dm) between the pitch axis (C) and an axis (B) of the second bearing (43) passing through a median plane of the axial length of the bearing.

7. Turbomachine module according to any of the preceding claims, **characterised in that** the annular body (53) comprises a downstream face (81) in which is defined a hole (117) that is centred on the longitudinal axis and the rotor portion (112) of the transfer device (103) comprises an upstream end (112a) that is housed in the hole (117).

8. Turbomachine module according to the preceding claim, **characterised in that** the annular body (53) comprises a radial flange (127) extending around the downstream face (81) and which is attached to a radial flange (126) of the rotor portion (112) of the fluid transfer device (103), a sealing wall (129) extending at least partly between the radial flanges (126, 127) and comprising an external edge (129b) in sealing contact with a cylindrical internal wall (130) of the fan shaft.

9. Turbomachine module according to any one of the preceding claims, **characterised in that** the fluid transfer device (103) extends at least partly within the fan shaft (32).

10. Turbomachine module according to any one of claims 2 to 9, **characterised in that** the stator portion (105) of the fluid transfer device (103) is attached to the planet carrier (38) through which at least one first feed channel (107a) and a second feed channel (107b) pass.

11. Turbomachine module according to any one of claims 7 to 10, **characterised in that** the control means (52) comprises a first chamber (63a) and a second chamber (63b) of variable volume, and feeding means for feeding the first and second chambers which are formed in the annular body, the feeding means comprising at least one first conduit (115) opening into the first chamber (63a) and at least one second conduit (116) opening into the second chamber (63b), the first conduit (115) and the second conduit (116) also opening into the downstream face (81) of the annular body (53).

12. Turbomachine module according to the preceding claim, **characterised in that** the stator portion (105) comprises an internal cylindrical surface (110) and first pipelines (111) opening into the internal cylindrical surface (110), the rotor portion (112) comprising an external cylindrical surface (113) into which second pipelines (114) open, the second pipelines (114) being coupled respectively with the first and second conduits (115, 116) of the annular body (53).

13. Turbomachine module according to any one of the preceding claims, **characterised in that** the movable body (54) displaces in translation along the longitudinal axis.

14. Turbomachine module according to any one of the preceding claims, **characterised in that** the pitch change system (50) comprises an annular part (70) being generally bell-shaped and connecting the connection mechanism (51) to the control means (52), the annular part (70) extending at least partly radially outwardly from the stationary body (53).

15. Aircraft turbomachine comprising at least one turbomachine module according to any of the preceding claims.
